# EUROPEAN PATENT APPLICATION

(11) **EP 4 542 068 A1**
(43) Date of publication of application: **23.04.2025**
(21) Application number: 23823682.2
(22) Date of filing: 30.05.2023
(51) Int. Cl.: F16C 33/20, C08J 5/16, B29C 48/12

(54) **SLIDING MEMBER FOR CONVEYANCE DEVICES AND RESIN COMPOSITION**

(30) Priority: 17.06.2022 JP 2022098246
(71) Applicant: GLOBAL POLYACETAL CO., LTD., Tokyo 105-0021 (JP)
(72) Inventor: KOBAYASHI, Daisuke, Hiratsuka-shi, Kanagawa 254-0016 (JP); FUJIMOTO, Kunihiko, Hiratsuka-shi, Kanagawa 254-0016 (JP); AKADA, Masayuki, Hiratsuka-shi, Kanagawa 254-0016 (JP); YAMAMOTO, Yuta, Hiratsuka-shi, Kanagawa 254-0016 (JP)
(74) Representative: Zimmermann & Partner Patentanwälte mbB
(86) International application number: PCT/JP2023/020019
(87) International publication number: WO 2023/243388

(57) **Abstract**

To provide a sliding member for transport devices that has excellent wear resistance and can be subjected to profile section forming, and a resin composition. The sliding member for transport devices, formed from a resin composition contains (A) a polyacetal resin, wherein a cross-sectional area of a wear groove is 1,000 µm² or less when a JIS K7139 multipurpose test specimen type A1 formed from the resin composition and an S45C pin are subjected to reciprocating sliding 40,000 times at a moving speed of 6,000 mm/min, a load of 500 g, and a one-way moving distance of 20 mm, and the melt volume flow rate of the polyacetal resin as measured according to JIS K7210-1 is 1.0 to 5.0 cm³/10 min.

## Description

### [Technical Field]

The present invention relates to a sliding member for transport devices and a resin composition. In particular, it relates to a sliding member for transport devices containing a polyacetal resin as the main component.

### [Background Art]

Polyacetal resins are used in a wide range of applications as a plastic with excellent mechanical properties, electrical properties, and chemical properties such as chemical resistance.

Therefore, polyacetal resins are sometimes used as a sliding member for transport devices because of their excellent wear resistance (Patent Literature 1 and Patent Literature 2).

### [Citation List]

### [Patent Literature]

[Patent Literature 1] Japanese Patent Laid-Open No. 2014-047262
[Patent Literature 2] Japanese Patent Laid-Open No. 2006-001693

### [Summary of Invention]

### [Technical Problem]

As described above, the use of polyacetal resin in sliding members for transport devices has been studied, but these members were intended for conveyor chains. That is, the use of polyacetal resin for the rails of transport devices and the like has not been studied. The reason for this is thought to be that conveyor rails and the like have profile sections, such as a U-shape (one side removed from a square) or a hollow structure. In other words, when extruding conveyor rails and the like, profile section extrusion forming is used. However, polyacetal resin shrinks during extrusion forming, making it difficult to adjust the dimensions of formed products with profile sections. Up until now, conveyor rails and the like have been formed by extruding MC Nylon (registered trademark) or the like into plates or round bars, which are then cut out and formed. However, cutting naturally increases the number of work processes.

The present invention aims to solve such problem, and aims to provide a sliding member for transport devices that has excellent wear resistance and can be subjected to profile section forming, and a resin composition that can provide the sliding member for transport devices.

### [Solution to Problem]

The present inventors conducted research to address the above-mentioned problems, and as a result, the problems described above are solved by the following means.
<1> A sliding member for transport devices, formed from a resin composition comprising (A) a polyacetal resin, wherein a cross-sectional area of a wear groove is 1,000 µm² or less when a JIS K7139 multipurpose test specimen type A1 formed from the resin composition and an S45C pin are subjected to reciprocating sliding 40,000 times at a moving speed of 6,000 mm/min, a load of 500 g, and a one-way moving distance of 20 mm, and
   the melt volume flow rate of the polyacetal resin as measured according to JIS K7210-1 is 1.0 to 5.0 cm³/10 min.
<2> The sliding member for transport devices according to <1>, wherein the sliding member for transport devices is a profile section extrusion formed product.
<3> The sliding member for transport devices according to <1>,
   wherein the resin composition comprises:
   per 100 parts by mass of the (A) polyacetal resin,
   0.3 to 2.5 parts by mass of (B) a metal salt of fatty acid comprising calcium and/or magnesium, and
      0.3 to 2.5 parts by mass of (C) a fatty acid ester, and
   wherein the mass ratio of (B)/(C) is 0.5 or more and less than 5.
<4> The sliding member for transport devices according to <3>, wherein the metal salt of fatty acid (B) has an aliphatic group having 10 to 50 carbon atoms.
<5> The sliding member for transport devices according to <1>,
   wherein the sliding member for transport devices is a profile section extrusion formed product, the resin composition comprises:
   per 100 parts by mass of the (A) polyacetal resin,
   0.3 to 2.5 parts by mass of (B) a metal salt of fatty acid comprising calcium and/or magnesium, and 0.3 to 2.5 parts by mass of (C) a fatty acid ester, the mass ratio of (B)/(C) is 0.5 or more and less than 5, and the metal salt of fatty acid (B) has an aliphatic group having 10 to 50 carbon atoms.
<6> The sliding member for transport devices according to <1> or <5>, which is a conveyor rail.
<7> A resin composition comprising: per 100 parts by mass of (A) a polyacetal resin, 0.3 to 2.5 parts by mass of (B) a metal salt of fatty acid comprising calcium and/or magnesium, and 0.3 to 2.5 parts by mass of (C) a fatty acid ester, wherein the mass ratio of (B)/(C) is 0.5 or more and less than 5, and the melt volume flow rate of the polyacetal resin as measured according to JIS K7210-1 is 1.0 to 5.0 cm³/10 min.
<8> The resin composition according to <7>, which is a conveyor rail.

### [Advantageous Effects of Invention]

The present invention has made it possible to provide a sliding member for transport devices that has excellent wear resistance and can be subjected to profile section forming, and a resin composition that can provide the sliding member for transport devices.

### [Description of Embodiments]

Hereinafter, an embodiment of the present invention (hereinafter, simply referred to as "the present embodiment") will be described in detail. The following present embodiment is an example to illustrate the present invention, and the present invention is not limited to the present embodiment only.

In the present specification, "to" is used in the sense of including the numerical values listed before and after it as lower and upper limits.

In the present specification, the various physical property values and characteristic values are those at 23°C unless otherwise stated.

If the measurement methods and the like described in the standards shown herein differ from year to year, the standards as of January 1, 2022 shall be used unless otherwise stated.

The sliding member for transport devices of the present embodiment is a sliding member for transport devices, formed from a resin composition containing (A) a polyacetal resin, wherein the cross-sectional area of the wear groove is 1,000 µm² or less when a JIS K7139 multipurpose test specimen type A1 formed from the resin composition and an S45C pin are subjected to reciprocating sliding 40,000 times at a moving speed of 6,000 mm/min, a load of 500 g, and a one-way moving distance of 20 mm, and the melt volume flow rate of the polyacetal resin as measured according to JIS K7210-1 is 1.0 to 5.0 cm³/10 min. Such member is a sliding member for transport devices that has excellent wear resistance and can be subjected to profile section forming.

### <Physical Property Values of Resin Composition>

In the present embodiment, the cross-sectional area of the wear groove is 1,000 µm² or less when a JIS K7139 multipurpose test specimen type A1 formed from the resin composition containing a polyacetal resin, and an S45C pin are subjected to reciprocating sliding 40,000 times at a moving speed of 6,000 mm/min, a load of 500 g, and a one-way moving distance of 20 mm. Examples of means for reducing the cross-sectional area of the wear groove include blending a (B) metal salt of fatty acid containing calcium and/or magnesium and a (C) fatty acid ester in the resin composition, and employing one or more means for precisely adjusting their blending ratios. In particular, this is achieved by employing a resin composition containing 0.3 to 2.5 parts by mass of (B) a metal salt of fatty acid containing calcium and/or magnesium, and 0.3 to 2.5 parts by mass of (C) a fatty acid ester per 100 parts by mass of the (A) polyacetal resin, wherein the mass ratio of (B)/(C) is 0.5 or more and less than 5, the metal salt of fatty acid (B) has an aliphatic group having 10 to 50 carbon atoms, and the melt volume flow rate of the polyacetal resin as measured according to JIS K7210-1 is 1.0 to 5.0 cm³/10 min.

The cross-sectional area of the wear groove is preferably 950 µm² or less, more preferably 900 µm² or less, even more preferably 850 µm² or less, still more preferably 800 µm² or less, and furthermore preferably 750 µm² or less. The lower limit of the cross-sectional area of the wear groove is ideally 0 µm², but is practically 100 µm² or more.

Next, the components contained in the resin composition of the present embodiment will be described.

### <(A) Polyacetal Resin>

The resin composition contains a polyacetal resin. By containing a polyacetal resin, a sliding member for transport devices with excellent sliding properties and mechanical strength is obtained.

The polyacetal resin used in the present embodiment is a polymer having an acetal structure -(-O-CRH-)ₙ- (wherein R indicates a hydrogen atom or an organic group) as a repeating structure, and usually has an oxymethylene group (-CH₂O-), where R is a hydrogen atom, as the main structural unit. In addition to acetal homopolymers consisting solely of this repeating structure, the polyacetal resin used in the present embodiment may also contain copolymers (including block copolymers), terpolymers, and the like containing one or more structural units other than the above oxymethylene group, and may have not only a linear structure but also a branched or cross-linked structure.

Examples of structural units other than the above oxymethylene group include optionally branched oxyalkylene groups having 2 or more and 10 or less carbon atoms, such as an oxyethylene group (-CH₂CH₂O-), an oxypropylene group (-CH₂CH₂CH₂O-), and an oxybutylene group (-CH₂CH₂CH₂CH₂O-), of which optionally branched oxyalkylene groups having 2 or more and 4 or less carbon atoms are preferred, and an oxyethylene group is particularly preferred. In addition, the content of such oxyalkylene structural units other than oxymethylene groups is preferably 0.1 mol% or more and 20 mol% or less, more preferably 0.1 mol% or more and 15 mol% or less in the polyacetal resin.

The method for producing the polyacetal resin used in the present embodiment is arbitrary and it may be produced by any conventionally known method. For example, as a method for producing a polyacetal resin with an oxymethylene group and an oxyalkylene group having 2 or more and 4 or less carbon atoms as structural units, a cyclic oligomer of an oxymethylene group, such as the trimer (trioxane) or tetramer (tetraoxane) of formaldehyde, and a cyclic oligomer containing an oxyalkylene group having 2 or more and 4 or less carbon atoms, such as ethylene oxide, 1,3-dioxolane, 1,3,6-trioxocane, and 1,3-dioxepane can be copolymerized to produce the resin.

Of these, the polyacetal resin used in the present invention is preferably a copolymer of a cyclic oligomer such as trioxane or tetraoxane, and ethylene oxide and/or 1,3-dioxolane, and particularly preferably a copolymer of trioxane and 1,3-dioxolane. In this case, the total of ethylene oxide and/or 1,3-dioxolane is preferably 1 to 20 mass% per 80 to 99 mass% of cyclic oligomer.

The melt volume flow rate (MVR) of the polyacetal resin, as measured under the conditions of JIS K7210-1, is 1.0 cm³/10 min or more, preferably 1.5 cm³/10 min or more, and more preferably 2.0 cm³/10 min or more. In addition, the MVR is 5.0 cm³/10 min or less, preferably 4.5 cm³/10 min or less, more preferably 4.0 cm³/10 min or less, and even more preferably 3.5 cm³/10 min or less. Adjusting the MVR of the polyacetal resin tends to effectively suppress the generation of voids during forming (especially during extrusion forming).

When the resin composition contains two or more polyacetal resins, the MVR of the mixture preferably satisfies the above range.

The resin composition preferably contains the (A) polyacetal resin at a ratio of 80 mass% or more, more preferably at a ratio of 85 mass% or more, even more preferably at a ratio of 90 mass% or more, and still more preferably at a ratio of 95 mass% or more of the resin composition. The upper limit is the amount of polyacetal resin corresponding to the total amount minus that of the (B) metal salt of fatty acid and (C) fatty acid ester, which are described below.

The resin composition may contain only one (A) polyacetal resin, or may contain two or more. When two or more are contained, the total amount is preferably in the above range.

### <(B) Metal Salt of Fatty Acid Containing Calcium and/or Magnesium>

The resin composition preferably contains 0.3 to 2.5 parts by mass of (B) a metal salt of fatty acid containing calcium and/or magnesium per 100 parts by mass of the (A) polyacetal resin. By containing these (B) metal salts of fatty acid, sliding properties can be imparted to the formed product.

The (B) metal salt of fatty acid used in the present embodiment is a calcium salt and/or magnesium salt, and preferably includes at least a calcium salt.

In addition, the (B) metal salt of fatty acid used in the present embodiment preferably has an aliphatic group having 10 to 50 carbon atoms. Furthermore, the number of carbon atoms is preferably 12 or more, more preferably 14 or more, and preferably 36 or less, more preferably 28 or less, even more preferably 25 or less, still more preferably 20 or less.

The aliphatic group is preferably a linear aliphatic group. The aliphatic group may be a saturated or unsaturated aliphatic group, but is preferably a saturated aliphatic group.

More specifically, examples of the fatty acid constituting the metal salt of fatty acid include myristic acid, pentadecylic acid, palmitic acid, margaric acid, stearic acid, arachidic acid, heneicosylic acid, behenic acid, lignoceric acid, cerotic acid, and montanic acid, with stearic acid being preferred.

In the present embodiment, the (B) metal salt of fatty acid is preferably calcium stearate and magnesium stearate, and more preferably calcium stearate.

The content of the (B) metal salt of fatty acid in the resin composition is preferably 0.3 parts by mass or more, more preferably 0.4 parts by mass or more, even more preferably 0.6 parts by mass or more, still more preferably 0.8 parts by mass or more, and furthermore preferably 0.9 parts by mass or more per 100 parts by mass of the polyacetal resin. Setting it to the above lower limit or more tends to effectively suppress slipping during forming when used in combination with a fatty acid ester. In addition, the content of the (B) metal salt of fatty acid is preferably 2.5 parts by mass or less, more preferably 2.2 parts by mass or less, even more preferably 2.0 parts by mass or less, still more preferably 1.5 parts by mass or less, and furthermore preferably 1.2 parts by mass or less per 100 parts by mass of the polyacetal resin. Setting it to the above upper limit or less allows to effectively suppress discoloration when applying heat to the formed product.

The resin composition may contain only one (B) metal salt of fatty acid, or may contain two or more. When two or more are contained, the total amount is preferably in the above range.

### <(C) Fatty Acid Ester>

The resin composition of the present embodiment preferably contains 0.3 to 2.5 parts by mass of (C) a fatty acid ester per 100 parts by mass of the (A) polyacetal resin. By containing the (C) fatty acid ester, the sliding properties of the resulting formed product can be improved.

The (C) fatty acid ester is a compound having 1 or more ester bonds per molecule, and is preferably a fatty acid full ester. A fatty acid ester usually means a compound obtained by the reaction of the COOH of a fatty acid and the OH of an alcohol, and a compound in which the COOH from the fatty acid and the OH from the alcohol are all esterified. The use of a fatty acid full ester allows to increase the limiting PV value for the resin member. The fatty acid full ester in the present embodiment may partially contain compounds in which unreacted fatty acid-derived free COOH and alcohol-derived free OH remain, to the extent normally acceptable to those skilled in the art, such as when commercial products are used.

In addition, the number of ester groups per molecule of (C) fatty acid ester is preferably 1 to 4, more preferably 1 to 3, even more preferably 1 or 2, and still more preferably 1.

The molecular weight of the (C) fatty acid ester is preferably 300 to 2,000. In particular, when the (C) fatty acid ester has one ester group, its molecular weight is preferably 300 to 800; when the (C) fatty acid ester has two ester groups, its molecular weight is preferably 300 to 800; when the (C) fatty acid ester has two ester groups, its molecular weight is preferably 300 to 1,000; when the (C) fatty acid ester has three ester groups, its molecular weight is preferably 500 to 1,200; and when the (C) fatty acid ester has four ester groups, its molecular weight is preferably 800 to 2,000.

In addition, the (C) fatty acid ester used in the present embodiment preferably has an aliphatic group having 10 to 50 carbon atoms, but the number of carbon atoms is more preferably 12 or more, even more preferably 14 or more, and preferably 36 or less, more preferably 28 or less, even more preferably 25 or less, and still more preferably 20 or less.

The aliphatic group is preferably a linear aliphatic group. The aliphatic group may be a saturated or unsaturated aliphatic group, but is preferably a saturated aliphatic group.

More specifically, examples of the fatty acid constituting the (C) fatty acid ester include myristic acid, pentadecylic acid, palmitic acid, margaric acid, stearic acid, arachidic acid, heneicosylic acid, behenic acid, lignoceric acid, cerotic acid, and montanic acid, with stearic acid being preferred.

As the fatty acid ester (C), stearyl stearate, glycol distearate, pentaerythritol tetrastearate, and triglyceride stearate are preferred, stearyl stearate, pentaerythritol tetrastearate, and triglyceride stearate are more preferred, and stearyl stearate is even more preferred.

The content of the (C) fatty acid ester in the resin composition of the present embodiment is preferably 0.3 parts by mass or more, more preferably 0.5 parts by mass or more, even more preferably 0.8 parts by mass or more, and still more preferably 0.9 parts by mass or more per 100 parts by mass of the (A) polyacetal resin. Setting it to the above upper limit or more tends to further shorten the measuring time during forming. In addition, the content of the (C) fatty acid ester is preferably 2.5 parts by mass or less, more preferably 2.2 parts by mass or less, even more preferably 2.0 parts by mass or less, still more preferably 1.5 parts by mass or less, and furthermore preferably 1.2 parts by mass or less per 100 parts by mass of the (A) polyacetal resin. Setting it to the above upper limit or less tends to further improve the measuring stability during forming.

The resin composition of the present embodiment may contain only one (C) fatty acid ester, or may contain two or more. When two or more are contained, the total amount is preferably in the above range.

In the resin composition of the present embodiment, the mass ratio of the (B) metal salt of fatty acid to the (C) fatty acid ester (mass ratio of (B)/(C)) is preferably 0.5 or more, more preferably 0.6 or more, even more preferably 0.8 or more, and still more preferably 0.9 or more. Setting it to the above lower limit or more tends to further shorten the measuring time during forming. In addition, the mass ratio of (B)/(C) is less than 5, preferably 4 or less, more preferably 3 or less, even more preferably less than 3, still more preferably 2 or less, furthermore preferably 1.5 or less, and still furthermore preferably 1.2 or less. Setting it to the above upper limit or less tends to allow further reduction of the dynamic friction coefficient for the metal member.

### <Other Components>

Known additives and fillers may be added to the resin composition, as long as the purpose of the present invention is not impaired. Specific examples of the additives and fillers that can be used in the present embodiment include known thermoplastic polymers, antioxidants, antistatic agents, ultraviolet absorbers, heat stabilizers, light stabilizers, carbon fibers, glass fibers, glass flakes, talc, mica, calcium carbonate, and potassium titanate whiskers.

The total content of these components is preferably a ratio of 10 mass% or less of the resin composition.

The resin composition is preferably substantially free from slidability improvers other than the (B) metal salt of fatty acid and (C) fatty acid ester. Substantially free means that the content of the other slidability improver is 10 mass% or less of the total amount of the (B) metal salt of fatty acid and (C) fatty acid ester, preferably 5 mass% or less, more preferably 3 mass% or less, and even more preferably 1 mass% or less. Examples of the other slidability improver include silicone and fluororesins.

The MVR of the resin composition used in the present embodiment, as measured according to JIS K7210-1, is preferably 6.0 cm³/10 min or less, more preferably 5.0 cm³/10 min or less, even more preferably 4.0 cm³/10 min or less, and still more preferably 3.5 cm³/10 min or less. In addition, the lower limit of the MVR is preferably 1.0 cm³/10 min or more, and may be 2.0 cm³/10 min or more, 2.5 cm³/10 min or more, or more than 2.7 cm³/10 min. Setting it to such range tends to provide a sliding member for transport devices with better profile extrusion properties.

### <Method for Producing Resin Composition>

The resin composition used in the present embodiment is easily prepared by known methods commonly used as methods to prepare conventional thermoplastic resin compositions. For example, (1) a method of mixing all the components constituting the resin composition, feeding them to an extruder and melt-kneading them to obtain a pellet-like composition, (2) a method of feeding some of the components constituting the composition through the main feed port of an extruder and the remaining components through the side feed port and melt-kneading them to obtain a pellet-like composition, (3) a method of preparing pellets of different compositions by extrusion or the like and then mixing the pellets to adjust them to a predetermined composition, and the like can be employed.

Examples of kneading machine include kneaders, Banbury mixers, and extruders. The various conditions and equipment for mixing and kneading are not particularly limited, and can be appropriately selected and determined from any conventionally known conditions. Kneading is preferably performed above the temperature at which the polyacetal resin melts, specifically above the melting temperature of the polyacetal resin (generally 180°C or more).

### <Sliding Member for Transport Devices>

The sliding member for transport devices of the present embodiment is formed from the above resin composition. The sliding member for transport devices of the present embodiment is preferably produced by pelletizing the above resin composition and then subjecting it to profile section extrusion forming. The sliding member for transport devices of the present embodiment can also be produced by directly performing profile section extrusion forming on a resin composition that has been melt-kneaded in an extruder. That is, the sliding member for transport devices of the present embodiment is preferably a profile section extrusion formed product. Means for enabling profile section extrusion forming are achieved, for example, by blending a (B) metal salt of fatty acid containing calcium and/or magnesium and a (C) fatty acid ester in the polyacetal resin, and precisely adjusting their blending ratios.

The sliding member for transport of the present embodiment is preferably a conveyor rail.

Therefore, the sliding member for transport of the present embodiment can also be used not only with sliding members of the present embodiment, but also as a sliding member for transport combined with other resin sliding members, fiber-reinforced resin sliding members, as well as ceramic or metal sliding members.

### [Examples]

Hereinafter, the present invention will be described more specifically with reference to Examples. The materials, amounts used, proportions, treatment details, treatment procedures, and the like shown in the following Examples can be appropriately changed, as long as the intent of the present invention is not departed from. Therefore, the scope of the present invention is not limited to the specific examples shown below.

If the measuring instruments and the like used in the Examples are unavailable due to discontinuation or the like, other instruments with equivalent performance can be used for measurement.

### 1. Raw Materials

The raw materials shown in the Table 1 were used.

**[Table 1]**

| Abbreviation | Details |
|---|---|
| POM(1) | Polyacetal resin, F10-01, manufactured by Mitsubishi Engineering-Plastics, MVR2.2cm³/10min |
| POM(2) | Polyacetal resin, F20-01, manufactured by Mitsubishi Engineering-Plastics, MVR7.7cm³/10min |
| StCa | Calcium stearate, manufactured by NOF |
| StMg | Magnesium stearate, manufactured by NOF |
| StSt | Stearyl stearate, manufactured by NOF |
| Silicone | ML3040, manufactured by Hexa Chemical |
| PTFE | Polytetrafluoroethylene, manufactured by MC Yamasan Polymers, SG-3000 |
| UHWPE | NL-W, manufactured by Saxin |
| MC Nylon | MC901, manufactured by Mitsubishi Chemical Advanced Materials |

The melt volume flow rate (MVR, unit: cm³/10 min) was measured according to JIS K7210-1.

### 2. Production of Resin Compositions (Pellets, POM-1 to POM-17)

Each of the components shown in Table 2 or Table 3 was uniformly mixed using a tumbler in the ratios (parts by mass) shown in Table 2 or Table 3. The resulting mixture was melt-sheared and mixed using a twin-screw extruder (PCM30 manufactured by Ikegai Corp.) at a cylinder temperature of 190°C, screw rotation speed of 120 rpm, and discharge rate of 10 kg/h to produce pellets of the resin composition.

**[Table 2]**

| | | POM-1 | POM-2 | POM-3 | POM-4 | POM-5 | POM-6 | POM-7 | POM-8 | POM-9 |
|---|---|---|---|---|---|---|---|---|---|---|
| (A) | POM(1) | 100 | 100 | 100 | 100 | 100 | 100 | | 100 | |
| | POM(2) | | | | | | | 100 | | 100 |
| (B) | StCa | 0.5 | 1 | | | | 1 | 1 | | |
| | StMg | | | 1 | | | | | | |
| (C) | StSt | 1 | 1 | 1 | | 1 | 0.2 | 1 | | |
| Silicone | | | | | | | | | 1 | |
| PTFE | | | | | | | | | | 10 |
| (B)/(C) (mass ratio) | | 0.5 | 1 | 1 | - | 0 | 5 | 1 | - | - |
| MVR(cm³/10min) | | 2.8 | 3.0 | 3.3 | 2.5 | 2.7 | 2.6 | 8.6 | 8.7 | 6.1 |

**[Table 3]**

| | | POM-10 | POM-11 | POM-12 | POM-13 | POM-14 | POM-15 | POM-16 | POM-17 |
|---|---|---|---|---|---|---|---|---|---|
| (A) | POM(1) | 100 | 100 | 100 | 100 | 100 | 100 | 100 | 100 |
| | POM(2) | | | | | | | | |
| (B) | StCa | 0.5 | 0.2 | 2 | 2 | 1.5 | 0.2 | 3 | 1 |
| | StMg | | | | | | | | |
| (C) | StSt | 0.5 | 0.2 | 2 | 0.5 | 0.5 | 1 | 3 | 0 |
| Silicone | | | | | | | | | |
| PTFE | | | | | | | | | |
| (B)/(C) (mass ratio) | | 1 | 1 | 1 | 4 | 3 | 0.2 | 1 | |
| MVR(cm³/10min) | | 2.6 | 2.5 | 2.4 | 2.3 | 2.6 | 2.4 | 2.6 | 2.6 |

The MVRs in Tables 2 and 3 above refer to the MVRs of the resin compositions.

### 3. Examples 1 to 9 and Comparative Examples 1 to 10

### <Molding of JIS K7139 Multipurpose Test Specimen Type A1>

The pellets obtained above (predetermined commercial products for Comparative Examples 1 and 2) were used to mold JIS K7139 multipurpose test specimen type A1 (plate) in an EC100SX manufactured by Shibaura Machine at a cylinder temperature of 195°C, mold temperature of 90°C, holding pressure of 80 MPa, and injection speed of 19.3 mm/s.

### <Cross-Sectional Area of Wear Groove>

The cross-sectional area of the wear groove, when the JIS K7139 multipurpose test specimen type A1 (plate) obtained above and an S45C pin were subjected to reciprocating sliding 40,000 times at a moving speed of 6,000 mm/min, a load of 500 g, and a one-way moving distance of 20 mm, was measured using a SURFCOM 3000A manufactured by ACCRETECH.

### <Profile Extrusion>

The pellets obtained above (predetermined commercial products for Comparative Examples 1 and 2) were used to perform profile extrusion with an FS50 manufactured by Ikegai Corp. at a cylinder temperature of 180°C, screw rotation speed of 9.0 rpm, and a cooling die temperature of 60°C. The shape of the profile extrusion section was a U-shape.

It was indicated as "suitable" when suitable for profile extrusion forming, and "unsuitable" when not suitable for profile extrusion forming. Examples of unsuitable for profile extrusion forming include the formation of voids. The assessment was made by five experts, by a majority vote.

### <Cutting>

It was indicated "not necessary" when profile extrusion forming could be performed, and no cutting was necessary, and "necessary" when profile extrusion forming could not be performed and cutting was necessary.

**[Table 4]**

| | Example 1 | Example 2 | Example 3 | Comparative Example 1 | Comparative Example 2 | Comparative Example 3 | Example 4 |
|---|---|---|---|---|---|---|---|
| Plate material | POM-1 | POM-2 | POM-3 | UHWPE | MC Nylon | POM-4 | POM-10 |
| Cross-sectional area of wear groove (µm²) | 740 | 640 | 700 | 2990 | 7210* | 18005 | 704 |
| Profile extrusion | Suitable | Suitable | Suitable | Unsuitable | Unsuitable | Suitable | Suitable |
| Cutting | Not necessary | Not necessary | Not necessary | Necessary | Necessary | Not necessary | Not necessary |

**[Table 5]**

| | Example 5 | Example 6 | Example 7 | Example 8 | Example 9 | Comparative Example 4 |
|---|---|---|---|---|---|---|
| Plate material | POM-11 | POM-12 | POM-13 | POM-14 | POM-15 | POM-5 |
| Cross-sectional area of wear groove (µm²) | 866 | 225 | 750 | 780 | 380 | 3500 |
| Profile extrusion | Suitable | Suitable | Suitable | Suitable | Suitable | Suitable |
| Cutting | Not necessary | Not necessary | Not necessary | Not necessary | Not necessary | Not necessary |

**[Table 6]**

| | Comparative Example 5 | Comparative Example 6 | Comparative Example 7 | Comparative Example 8 | Comparative Example 9 | Comparative Example 10 |
|---|---|---|---|---|---|---|
| Plate material | POM-6 | POM-7 | POM-8 | POM-9 | POM-16 | POM-17 |
| Cross-sectional area of wear groove (µm²) | 2000 | 800 | 87060 | 12650 | 255 | 8900 |
| Profile extrusion | Suitable | Unsuitable | Unsuitable | Unsuitable | Unsuitable | Suitable |
| Cutting | Not necessary | Necessary | Necessary | Necessary | Necessary | Not necessary |

In Comparative Example 2, the wear test was stopped due to the upper limit of friction force being reached in the middle of the test.

As is clear from the above results, in Examples 1 to 9, the formed products could be formed by profile section extrusion forming. In particular, the profile extrusion formed products were also suitable as formed products, and cutting was not necessary. Their wear resistance was also excellent.

By contrast, in Comparative Examples 1 and 2, which used resins other than polyacetal resin, profile extrusion could not be performed and cutting was necessary.

Even when polyacetal resin was used, if the composition of the resin composition and the like was not adjusted, profile extrusion could not be performed or the wear resistance was inferior (Comparative Examples 3 to 10). In particular, in Comparative Examples 6 to 8, profile extrusion forming could not be properly performed, with voids being formed in the formed products, and the like.

## Claims

1. A sliding member for transport devices, formed from a resin composition comprising (A) a polyacetal resin,
wherein a cross-sectional area of a groove is 1,000 µm² or less when a JIS K7139 multipurpose test specimen type A1 formed from the resin composition and an S45C pin are subjected to reciprocating sliding 40,000 times at a moving speed of 6,000 mm/min, a load of 500 g, and a one-way moving distance of 20 mm, and
a melt volume flow rate of the polyacetal resin as measured according to JIS K7210-1 is 1.0 to 5.0 cm³/10 min.

2. The sliding member for transport devices according to claim 1, wherein the sliding member for transport devices is a profile section extrusion formed product.

3. The sliding member for transport devices according to claim 1,
wherein the resin composition comprises:
per 100 parts by mass of the (A) polyacetal resin,
0.3 to 2.5 parts by mass of (B) a metal salt of fatty acid comprising calcium and/or magnesium, and
0.3 to 2.5 parts by mass of (C) a fatty acid ester, and
wherein a mass ratio of (B)/(C) is 0.5 or more and less than 5.

4. The sliding member for transport devices according to claim 3, wherein the metal salt of fatty acid (B) has an aliphatic group having 10 to 50 carbon atoms.

5. The sliding member for transport devices according to claim 1,
wherein the sliding member for transport devices is a profile section extrusion formed product,
the resin composition comprises:
per 100 parts by mass of the (A) polyacetal resin,
0.3 to 2.5 parts by mass of (B) a metal salt of fatty acid comprising calcium and/or magnesium, and 0.3 to 2.5 parts by mass of (C) a fatty acid ester,
a mass ratio of (B)/(C) is 0.5 or more and less than 5, and
the metal salt of fatty acid (B) has an aliphatic group having 10 to 50 carbon atoms.

6. The sliding member for transport devices according to claim 1 or 5, which is a conveyor rail.

7. A resin composition comprising: per 100 parts by mass of (A) a polyacetal resin, 0.3 to 2.5 parts by mass of (B) a metal salt of fatty acid comprising calcium and/or magnesium, and 0.3 to 2.5 parts by mass of (C) a fatty acid ester, wherein a mass ratio of (B)/(C) is 0.5 or more and less than 5, and the melt volume flow rate of the polyacetal resin as measured according to JIS K7210-1 is 1.0 to 5.0 cm³/10 min.

8. The resin composition according to claim 7, which is a conveyor rail.
